# EUROPEAN PATENT APPLICATION

(11) **EP 4 650 085 A1**
(43) Date of publication of application: **19.11.2025**
(21) Application number: 23916132.6
(22) Date of filing: 09.11.2023
(51) Int. Cl.: B23B 5/36, B23B 1/00, G05B 19/4093, B23Q 5/50

(54) **MACHINE TOOL AND CONTROL DEVICE**

(30) Priority: 10.01.2023 JP 2023001701
(71) Applicant: Citizen Watch Co., Ltd., Nishitokyo-shi, Tokyo 188-8511 (JP); Citizen Machinery Co., Ltd., Nagano 389-0206 (JP)
(72) Inventor: CHIDA, Kunihide, Kitasaku-gun, Nagano 389-0206 (JP); MISONO, Haruhiko, Kitasaku-gun, Nagano 389-0206 (JP); SANNOMIYA, Kazuhiko, Kitasaku-gun, Nagano 389-0206 (JP)
(74) Representative: Ribeiro, James Michael
(86) International application number: PCT/JP2023/040367
(87) International publication number: WO 2024/150514

(57) **Abstract**

A machine tool comprising a main spindle to which a workpiece 21 is to be attached; a rotation mechanism that rotates the main spindle; a tool holder that holds a tool for cutting the workpiece 21; a movement mechanism that moves the main spindle and the tool holder relative to each other in a rotation axis direction of the main spindle; a vibration mechanism that vibrates the main spindle and the tool holder relative to each other in a vibration direction perpendicular to the rotation axis direction; and a control unit that controls the rotation mechanism and the vibration mechanism. The machine tool cutting the workpiece 21 by using the movement mechanism and the vibration mechanism so as to vibrate and move the workpiece 21 and the tool relatively each other, while the rotation mechanism rotates the main spindle. The control unit driving the rotation mechanism and the vibration mechanism such that the tool is located at the same position in the vibration direction for each fixed rotation period of the main spindle and controlling the rotation mechanism and the vibration mechanism such that an outer circumferential surface or inner circumferential surface of the workpiece 21 is machined into a substantially regular polygonal shape when viewed in the rotation axis direction.

## Description

### [Technical Field]

The present invention relates to a machine tool and a control device that controls the machine tool.

### [Background Art]

In so-called lathe turning, cutting is performed with a machine tool while rotating a workpiece, and therefore there are limitations on a finished shape of the workpiece. The lathe turning is mostly performed to obtain a cylindrical shape, a columnar shape, or a shape of a combination thereof.

Conventionally, a method has been proposed which controls, in lathe turning, movement of a tool and rotation of a workpiece in conjunction with each other to machine the workpiece into a shape other than a cylindrical shape or a columnar shape. PTL 1 discloses a technology of controlling a tool and a workpiece so as to vary a cutting depth in synchronization with a rotation phase of the workpiece, while moving the tool in a feeding direction, to obtain a helical groove shape by lathe turning.

### [Citation List]

### [Patent Literature]

### [PTL 1] Japanese Patent Application Publication No. 2002-36004

### [Summary of Invention]

### [Technical Problem]

However, the technology described above is intended to machine the workpiece to obtain the helical groove shape therein, and it is not possible to machine, e.g., a flat surface on an outer circumferential surface or an inner circumferential surface of the workpiece by using the technology described above.

An object of the present invention is to efficiently machine a workpiece into a substantially regular polygonal shape by lathe turning.

### Solution to Problem

### (First Aspect)

To solve the problem described above, a machine tool according to a first aspect of the present invention is a machine tool including: a main spindle to which a workpiece is to be attached; a rotation mechanism that rotates the main spindle; a tool holder that holds a tool for cutting the workpiece; a movement mechanism that moves the main spindle and the tool holder relative to each other in a rotation axis direction of the main spindle; a vibration mechanism that vibrates the main spindle and the tool holder relative to each other in a vibration direction perpendicular to the rotation axis direction; and a control unit that controls the rotation mechanism and the vibration mechanism, the machine tool cutting the workpiece by using the movement mechanism and the vibration mechanism so as to vibrate and move the workpiece and the tool relatively each other, while the rotation mechanism rotates the main spindle, the control unit driving the rotation mechanism and the vibration mechanism such that the tool is located at the same position in the vibration direction for each fixed rotation period of the main spindle and controlling the rotation mechanism and the vibration mechanism such that an outer circumferential surface or inner circumferential surface of the workpiece is machined into a substantially regular polygonal shape when viewed in the rotation axis direction.

### (Second Aspect)

In the above first aspect, it may be possible that the control unit sets a number of vibrations of the vibration mechanism per rotation of the main spindle on the basis of a number of angles of the regular polygonal shape.

### (Third Aspect)

In the above second aspect, it may be possible that, when the fixed rotation period is m and the number of angles of the regular polygonal shape is n, m is a natural number of 1 or more, n is a natural number of 3 or more, and m and n are prime to each other; and the control unit sets the number of vibrations of the vibration mechanism to n/m.

### (Fourth Aspect)

In any one of the above first to third aspects, it may be possible that, when the tool is located at an amplitude upper limit of a vibration waveform of the tool resulting from the vibration mechanism, a cutting depth of the tool into the workpiece is larger than that when the tool is located at an amplitude lower limit of the vibration waveform; and the control unit controls the movement mechanism and the vibration mechanism in synchronization such that, during cutting of the outer circumferential surface of the workpiece, a center of a side of the regular polygonal shape is machined when the tool is located at the amplitude upper limit of the vibration waveform.

### (Fifth Aspect)

In any one of the above first to fourth aspects, it may be possible that, when the tool is located at an amplitude upper limit of a vibration waveform of the tool resulting from the vibration mechanism, a cutting depth of the tool into the workpiece is larger than that when the tool is located at an amplitude lower limit of the vibration waveform; and the control unit controls the movement mechanism and the vibration mechanism in synchronization such that, during cutting of the inner circumferential surface of the workpiece, a vertex of the regular polygonal shape is machined when the tool is located at the amplitude upper limit of the vibration waveform.

### (Sixth Aspect)

In any one of the above first to fifth aspects, it may be possible that the movement mechanism is configured to be able to move the main spindle and the tool holder relative to each other in a direction parallel to the vibration direction.

### (Seventh Aspect)

In the above sixth aspect, it may be possible that the control unit is capable of controlling an operation of the movement mechanism and, when first machining of obtaining a substantially regular polygonal machined surface when viewed in the rotation axis direction and second machining of machining the machined surface into a shape similar to that of the machined surface when viewed in the rotation axis direction are to be performed, the control unit controls the rotation mechanism, the movement mechanism, and the vibration mechanism such that a phase of the vibration waveform of the tool resulting from the vibration mechanism with respect to rotation of the main spindle in the second machining coincides with that in the first machining.

### (Eighth Aspect)

To solve the problem described above, a machine tool according to an eighth aspect of the present invention is a control device that controls a machine tool including: a main spindle to which a workpiece is to be attached; a rotation mechanism that rotates the main spindle; a tool holder that holds a tool for cutting the workpiece; a movement mechanism that moves the main spindle and the tool holder relative to each other in a rotation axis direction of the main spindle; and a vibration mechanism that vibrates the main spindle and the tool holder relative to each other in a vibration direction perpendicular to the rotation axis direction, the machine tool machining an outer circumferential surface or inner circumferential surface of the workpiece into a substantially regular polygonal shape when viewed in the rotation axis direction by using the movement mechanism and the vibration mechanism so as to vibrate and move the workpiece and the tool relative to each other, while the rotation mechanism rotates the main spindle, the control device driving the rotation mechanism and the vibration mechanism such that the tool is located at the same position in the vibration direction for each fixed rotation period of the main spindle.

### Advantageous Effects of Invention

According to the present invention, it is possible to efficiently machine a workpiece into a substantially regular polygonal shape by lathe turning.

### [Brief Description of Drawings]

[Fig. 1]

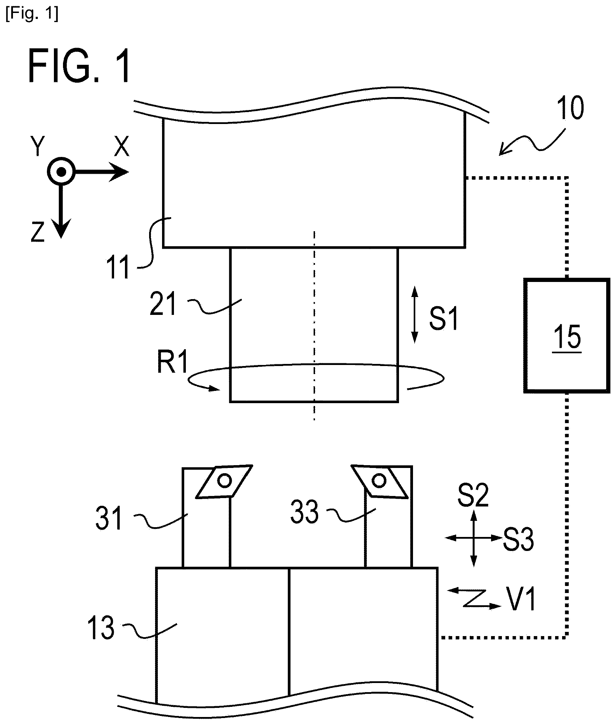

   Fig. 1 is a schematic configuration diagram of a machine tool according to an embodiment of the present invention.
[Fig. 2]

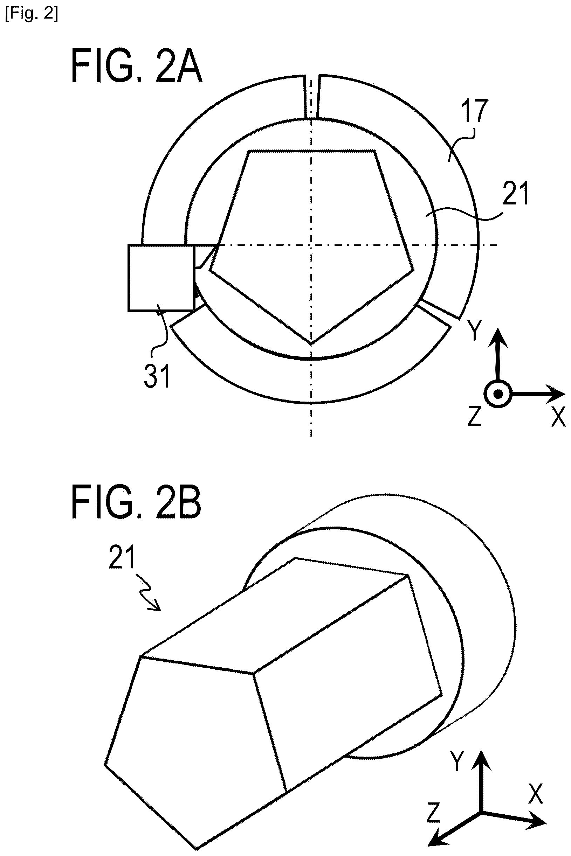

   Fig. 2 is a diagram illustrating a workpiece machined into a polygonal shape by outer diameter machining.
[Fig. 3]

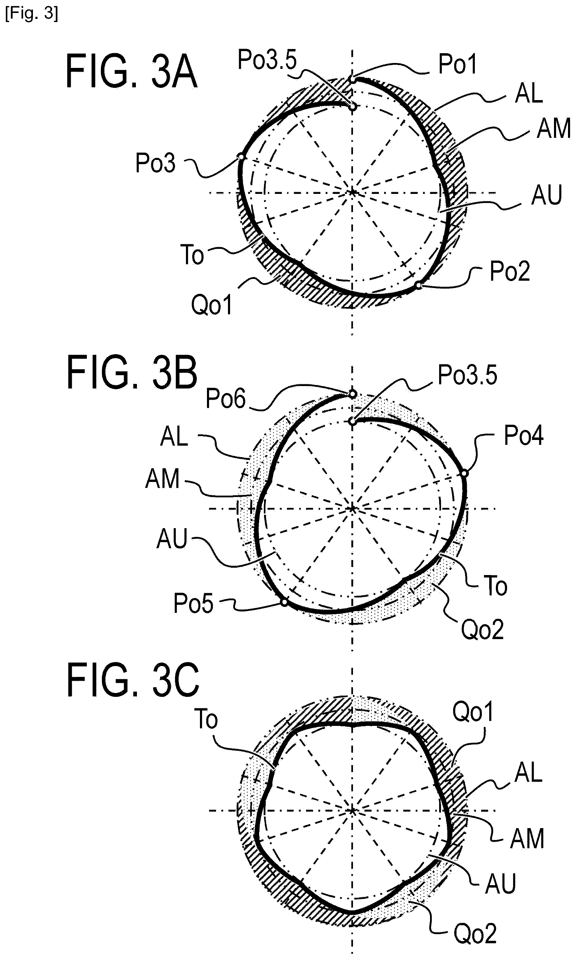

   Fig. 3 is a front view illustrating the outer diameter machining according to the embodiment.
[Fig. 4]

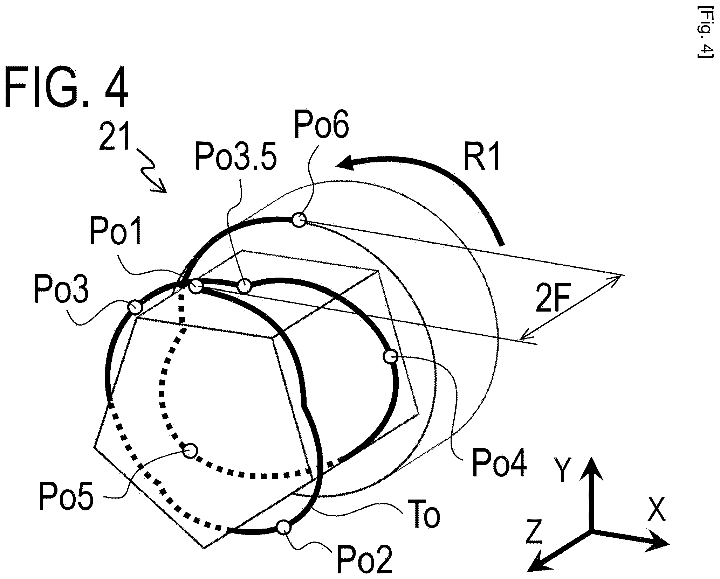

   Fig. 4 is a perspective view illustrating the outer diameter machining according to the embodiment.
[Fig. 5]

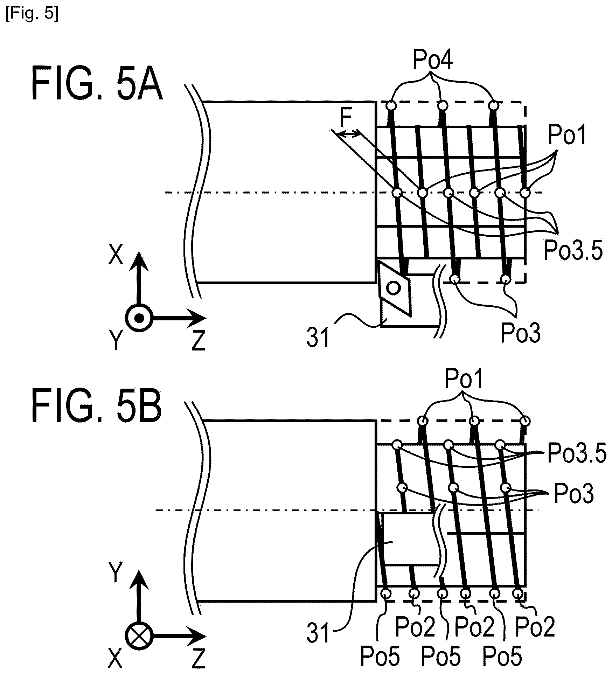

   Fig. 5 is a top view and a side view each illustrating the outer diameter machining according to the embodiment.
[Fig. 6]

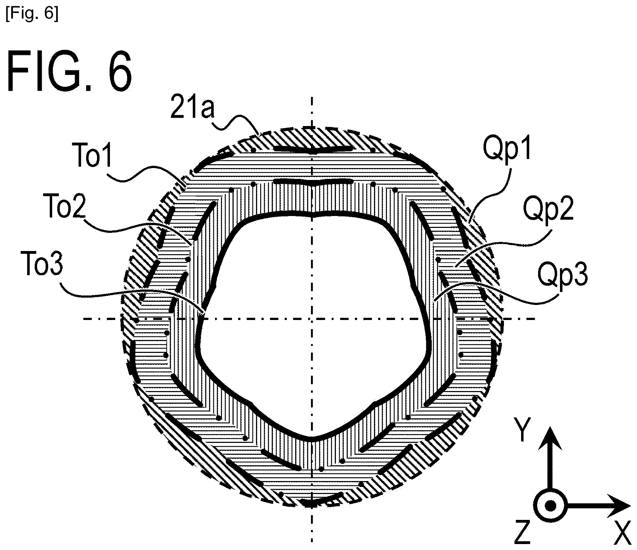

   Fig. 6 is a diagram illustrating a machining trajectory along each of paths of the outer diameter machining according to the embodiment.
[Fig. 7]

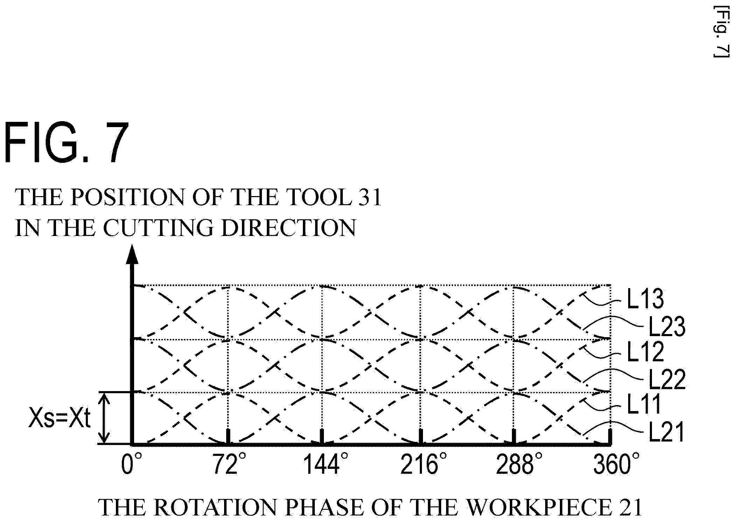

   Fig. 7 is a diagram illustrating a relationship between a workpiece rotation phase and a tool position according to the embodiment.
[Fig. 8]

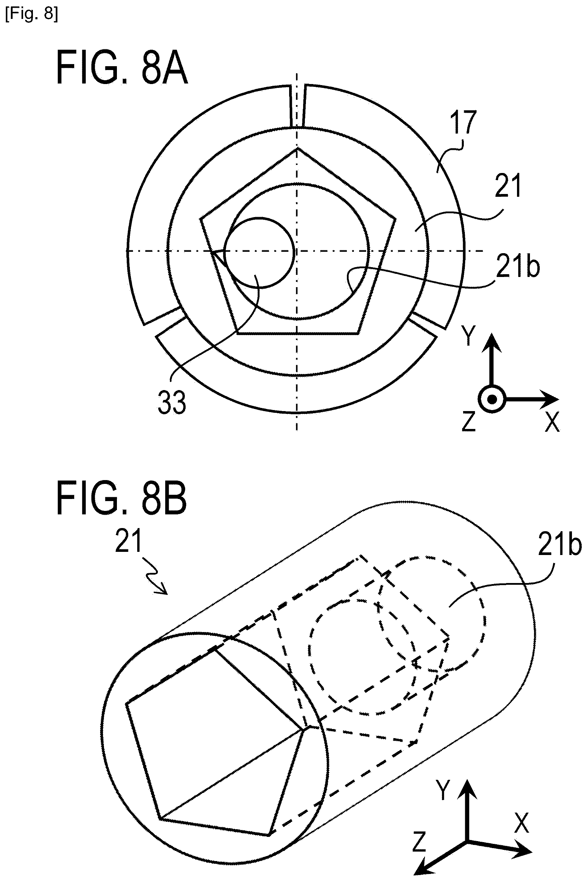

   Fig. 8 is a diagram illustrating the workpiece which is machined into a polygonal shape by inner diameter machining.
[Fig. 9]

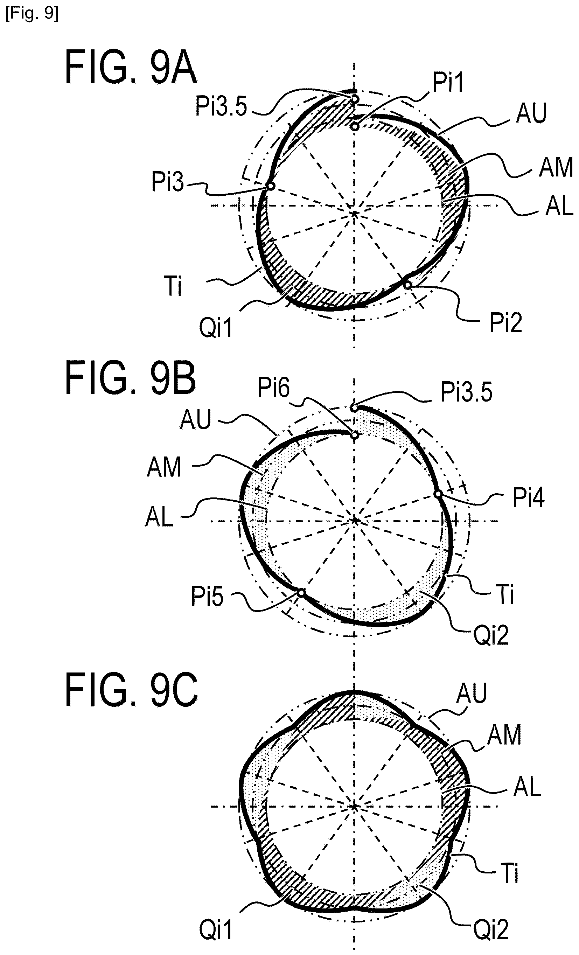

   Fig. 9 is a front view illustrating the inner diameter machining according to the embodiment.
[Fig. 10]

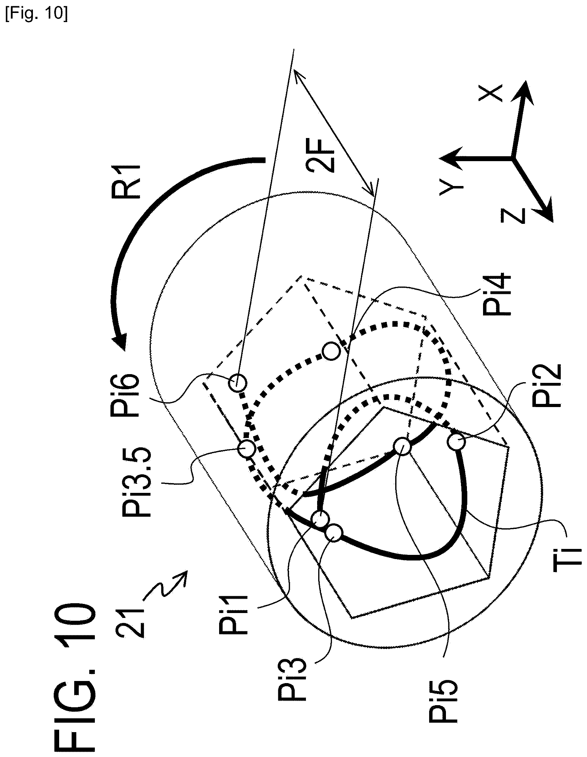

   Fig. 10 is a perspective view illustrating the inner diameter machining according to the embodiment.
[Fig. 11]

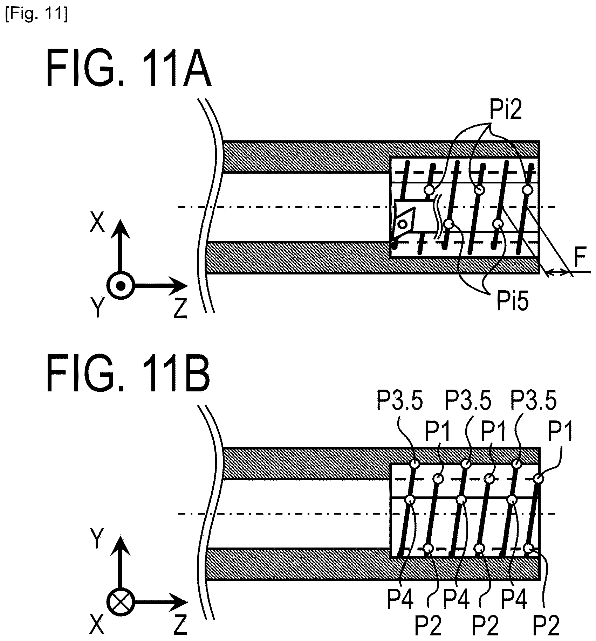

   Fig. 11 is a diagram illustrating the inner diameter machining according to the embodiment.
[Fig. 12]

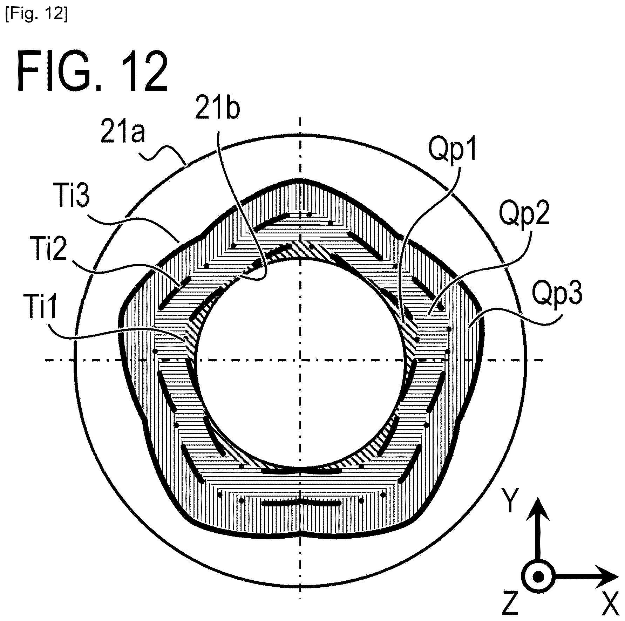

   Fig. 12 is a diagram illustrating a machining trajectory in each of paths of the inner diameter machining according to the embodiment.
[Fig. 13]

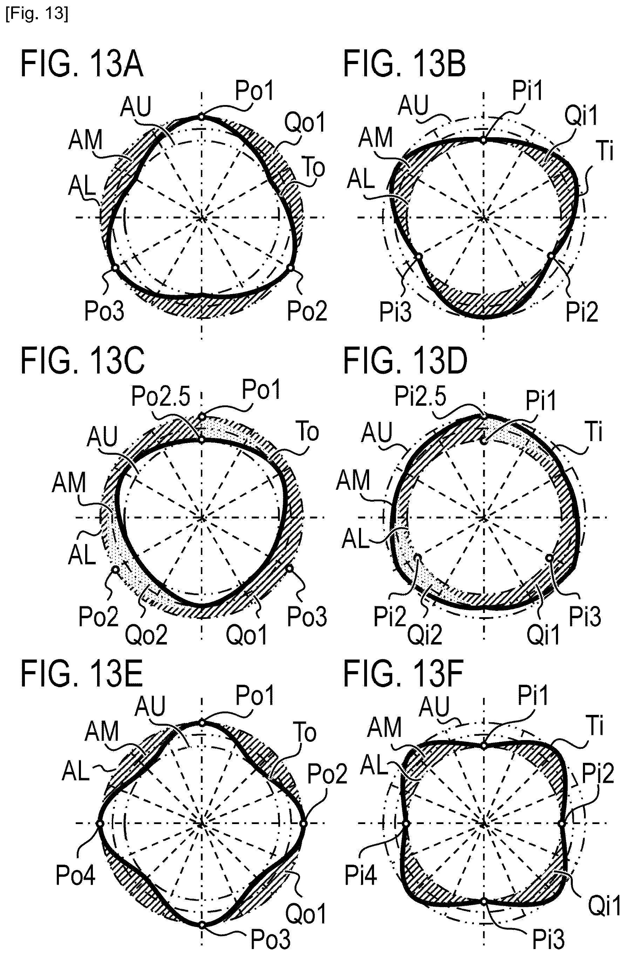

   Fig. 13 is a diagram illustrating another example in which the workpiece according to the embodiment is machined into a polygonal shape.

### [Description of Embodiments]

Referring to the drawings, the following will illustratively describe modes for carrying out this invention in detail on the basis of an embodiment. It should be noted that the dimensions, materials, shapes, a relative arrangement, or the like of components described in the embodiment are to be changed as appropriate depending on a configuration of a device to which the invention is applied or various conditions. In other words, it is not intended to limit the scope of the invention to the following embodiment.

The present invention is suitable for a machine tool that uses a tool to machine a workpiece into a polygonal shape, while rotating a workpiece. The present invention is also taken as a control device that controls the machine tool.

### <Embodiment>

### (Machine Tool 10)

First, a description will be given of a schematic configuration of a machine tool 10 according to the embodiment of the present invention. Fig. 1 is a schematic diagram illustrating the schematic configuration of the machine tool 10 according to the embodiment. The machine tool 10 includes a workpiece holder 11 that rotatably holds a workpiece 21 as a workpiece, a tool holder 13 that holds a tool for cutting the workpiece 21, and a control unit 15 that controls operation of the workpiece holder 11 and the tool holder 13. Note that, for the sake of descriptive convenience, an X-axis, a Y-axis, and a Z-axis which are perpendicular to each other are illustrated in the drawings as necessary. The X-axis and the Z-axis face a horizontal direction, while the Y-axis faces a vertical direction. Note that, in the present embodiment, a rotation axis direction S1 of the workpiece 21 held by the tool holder 13 is the Z-axis direction.

The workpiece holder 11 holds the workpiece 21 such that the workpiece 21 is rotatable in a rotation direction R1, while the workpiece 21 is movable in the rotation axis direction S1. The tool holder 13 holds the tool such that the tool is movable in a first direction S2 parallel to the rotation axis direction S1 and in a second direction S3 perpendicular to the first direction S2. The rotation axis direction S1 and the first direction S2 are parallel to the Z-axis direction, while the second direction S3 is parallel to the X-axis direction. In addition, the tool holder 13 is configured to be able to hold a plurality of the tools, and Fig. 1 illustrates the tool holder 13 holding a tool 31 for outer diameter machining and a tool 33 for inner diameter machining.

The machine tool 10 includes a rotation mechanism that uses the workpiece holder 11 to rotate the workpiece 21 and a movement mechanism that uses the workpiece holder 11 and the tool holder 13 to move the workpiece 21 and the tools relative to each other in parallel. For the rotation mechanism, known technology such as various motors can be used while, to the movement mechanism, known technology such as a linear servo motor, a ball screw mechanism, and a rack-and-pinion mechanism can be used.

The machine tool 10 further includes a vibration mechanism that vibrates the workpiece 21 and the tool relative to each other in a direction parallel to a movement direction of the movement mechanism. In the present embodiment, the tool holder 13 holds the tools such that the tools can be vibrated in a vibration direction V1 parallel to the X-axis direction. For the vibration mechanism, various known technology capable of reciprocably vibrating an object to be vibrated can be used.

The control unit 15 is a control device configured to be able to control operation of the rotation mechanism, the movement mechanism, and the vibration mechanism each described above. The control unit 15 can control the various mechanisms in conjunction with each other, and can control the workpiece holder 11 and the tool holder 13 such that, e.g., lathe turning is performed by synchronizing movement in a tool feeding direction and a cutting direction with a rotation phase of the workpiece 21.

Note that, in the present embodiment, a configuration is shown in which the workpiece 21 is held movable in the one direction, and the tool is held movable in the two directions and vibratable in the one direction. However, in applying the present invention, the machine tool 10 may also be configured such that, instead of the tool, the workpiece 21 is held movable in the two directions and vibratable in the one direction. Alternatively, the machine tool 10 may also be configured to hold only the tool movable. More specifically, the machine tool 10 needs only to be configured such that the workpiece 21 and the tool are movable relative to each other in the Z-axis direction and the X-axis direction, while being vibratable relative to each other in the X-axis direction. By being thus configured, the machine tool 10 can control the rotation mechanism and the vibration mechanism in conjunction with each other and machine each of an outer circumferential surface and an inner circumferential surface of the workpiece 21 into a substantially regular polygonal shape when viewed in the rotation axis direction of the workpiece 21. The following will describe a method of cutting the workpiece 21, while vibrating the tool 31 in synchronization with the rotation phase of the workpiece 21, to machine the workpiece 21 into the substantially polygonal shape.

### (First Machining Example)

First, as a first machining example, a case of cutting the workpiece 21 with the machine tool 10, while vibrating the tool 31 in synchronization with the rotation phase of the workpiece 21, to thereby machine the outer circumferential surface of the workpiece 21 into a substantially regular pentagonal shape will be described. Fig. 2(a) is a diagram illustrating the outer circumferential surface of the workpiece 21 which is machined into the regular pentagonal shape when viewed in the Z-axis direction, and illustrates the tool 31 for outer diameter machining which is in contact with the outer circumferential surface of the workpiece 21. Fig. 2(b) is a perspective view of the workpiece 21 with the machined outer circumferential surface when viewed in the Z-axis direction. The workpiece 21 is held by a jaw portion 17 forming a main spindle of the workpiece holder 11 to rotate integrally with the main spindle.

A description will be given of a method of machining the outer circumferential surface of the workpiece 21 into the regular pentagonal shape by setting a vibration number of the tool 31 per rotation of the workpiece 21 to 2.5 times. In the following description, the vibration number of the tool refers to the number of vibrations per rotation of the workpiece 21. In other words, in a case where the vibration number is 2.5 times, when the workpiece 21 rotates twice, the tool 31 vibrates five times.

Referring to Figs. 3(a) to 3(c), Fig. 4, and Figs. 5(a) and 5(b), a description will be given of the outer diameter machining performed with the vibration umber of 2.5 times. In the first machining example, the machine tool 10 performs cutting by moving the tool 31 in the Z-axis direction (feeding direction) and vibrating the tool 31 in the X-axis direction (cutting direction), while rotating the workpiece 21. In addition, in the first machining example, the tool 31 is vibrated with a sine wave by the vibration mechanism, while the workpiece 21 is rotated in a counterclockwise direction in Fig. 2(a).

Figs. 3(a) to 3(c) are front views illustrating the outer diameter machining performed by the machine tool 10, and a machining trajectory To is indicated by a solid line. The machining trajectory To indicates a position at which a leading end of the tool 31 in the cutting direction comes into contact with the workpiece 21, and the outer circumferential surface of the workpiece 21 is machined following the machining trajectory To. In addition, in Figs. 3(a) to 3(c), each of an amplitude upper limit AU, an amplitude middle AM, and an amplitude lower limit AL of the tool 31 is indicated by a dash-double-dot line. A cutting depth of the tool 31 into the workpiece 21 in the X-axis direction is largest when the tool 31 is located at the amplitude upper limit AU, and is smallest when the tool 31 is located at the amplitude lower limit AL. Since the tool 31 comes into contact with the outer circumferential surface of the workpiece 21, a diameter of a circle indicating the amplitude lower limit AL is largest, while a diameter of a circle indicating the amplitude upper limit AU is smallest. Note that, to clearly show the vibration of the tool, each of the drawings illustrating the machining trajectory, such as Figs. 3(a) to 3(c), illustrates the machining trajectory in enlarged relation in the vibration direction V1, the feeding direction, or the like of the tool.

Fig. 3(a) is a front view illustrating the machining trajectory To in a first rotation of the workpiece 21, which is viewed in the Z-axis direction. As described above, in one rotation of the workpiece 21, the tool 31 vibrates 2.5 times. In Fig. 3(a), a starting point of the tool 31 in a first vibration thereof is illustrated as a point Po1, an ending point of the tool 31 in the first vibration, which is also a starting point of the tool 31 in a second vibration thereof, is illustrated as a point Po2, and an ending point of the tool 31 in the second vibration, which is also a starting point of the tool 31 in a third vibration thereof, is illustrated as a point Po3. Additionally, in Fig. 3(a), a position when the tool 31 has vibrated 2.5 times, which is also a middle point of the tool 31 in the third vibration, is illustrated as a point Po3.5.

In this machining, the amplitude lower limit AL is set to coincide with the outer circumferential surface of the workpiece 21 before the machining thereof, while the tool 31 is located at the point Po1, and starts to come into contact with the workpiece 21 at the amplitude lower limit AL. Then, when the workpiece 21 rotates 2/5 times, the tool 31 vibrates once to move to the point Po2 and come into contact with the workpiece 21 again at the amplitude lower limit AL. When the workpiece 21 rotates 2/5 times from there, the tool 31 vibrates one more time to move to the point Po3 and come into contact with the workpiece 21 at the amplitude lower limit AL. When the workpiece 21 rotates 1/5 times from there, the tool vibrates 1/2 times to move to the point Po3.5 and come into contact with the workpiece 21 at the amplitude upper limit AU. In Fig. 3(a), a region Qo1 to be machined in a second rotation of the workpiece 21 is filled with oblique lines.

Fig. 3(b) is a front view illustrating the machine trajectory To in the second rotation of the workpiece 21, which is viewed in the Z-axis direction. In Fig. 3(b), an ending point of the tool 31 in the third vibration, which is also a starting point of the tool 31 in a fourth vibration thereof, is illustrated as a point Po4, an ending point of the tool 31 in the fourth vibration, which is also a starting point of the tool 31 in a fifth vibration thereof, is illustrated as a point Po5, and an ending point of the tool 31 in the fifth vibration, which is also a starting point of the tool 31 in a sixth vibration thereof, is illustrated as a point Po6. In addition, in Fig. 3(b), a middle point of the tool 31 in the third vibration, which is also a position of the tool 31 when the second rotation of the workpiece 21 is started, is illustrated as the point Po3.5.

As described above, when the second rotation of the workpiece 21 is started, the tool 31 is located at the point Po3.5, and the workpiece 21 rotates 1/5 times from there to move the tool 31 to the point Po4 and bring the tool 31 into contact with the workpiece 21 at the amplitude lower limit AL. When the workpiece 21 then rotates 2/5 times, the tool 31 vibrates once to move to the point Po5, and comes into contact with the workpiece 21 again at the amplitude lower limit AL. When the workpiece 21 rotates 2/5 times from there, the tool 31 vibrates one more time to move to the point Po6 and come into contact with the workpiece 21 at the amplitude lower limit AL. In Fig. 3(b), a region Qo2 to be machined in the second rotation of the workpiece 21 is filled with dots.

In the third and subsequent rotations of the workpiece 21, the machining described above is repetitively performed in sequence. In other words, in an odd-ordinal-numbered rotation of the workpiece 21, the machining is performed with the machining trajectory To illustrated in Fig. 3(a) while, in an even-ordinal-numbered rotation of the workpiece 21, the machining is performed with the machining trajectory To illustrated in Fig. 3(b). Meanwhile, the control unit 15 drives the rotation mechanism and the vibration mechanism such that the tool 31 is located at the same position in the vibration direction V1 for each fixed rotation period of the main spindle of the workpiece holder 11 that holds the workpiece 21. More specifically, when the workpiece 21 has rotated by s (s: 0, 1, 2, ...) × 144°, the tool 31 is located at the amplitude lower limit AL and, when the workpiece 21 has rotated by t (t: 0, 1, 2, ...) ×144+72°, the tool 31 is located at the amplitude upper limit AU. By continuously performing such machining in the rotation axis direction S1 (Z-axis direction) of the workpiece 21, the outer circumferential surface of the workpiece 21 is machined into a substantially regular pentagonal shape when viewed in the rotation axis direction S1 of the workpiece 21.

Fig. 3(c) is a diagram illustrating the respective machining trajectories To in the first and second rotations of the workpiece 21 which are superimposed on each other. Fig. 3(c) illustrates only a portion of the stacked machining trajectories To in the first and second rotations of the workpiece 21 where the cutting depth of the tool 31 into the workpiece 21 is large. As illustrated in Fig. 3(c), the superimposed machining trajectories To are formed in the substantially regular pentagonal shape, and it will be understood that the workpiece 21 is machined by the machining described above into the substantially regular pentagonal shape. As described above, each ofFigs. 3(a) to 3(c) is a diagram having a portion thereof illustrated in enlarged relation in the vibration direction V1 of the tool 31 and, in actual machining, the workpiece 21 is machined into a shape closer to the regular pentagonal shape than the shape illustrated in Fig. 3(c).

As illustrated in Fig. 3(c), in the first machining example, each of vertexes of the regular pentagonal shape of the workpiece 21 is machined when the tool 31 is located at the amplitude middle AM, while a center of each of the sides of the regular pentagonal shape of the workpiece 21 is machined when the tool 31 is located at the amplitude upper limit AU. In other words, a circle indicating the amplitude upper limit AU of the tool 31 is inscribed in the regular pentagonal shape of the workpiece 21. The control unit 15 controls the rotation mechanism and the movement mechanism such that the workpiece 21 is cut with the tool 31 in such a positional relationship.

Fig. 4 is a perspective view illustrating the machining trajectory To and the points Po1 to Po6 when the workpiece 21 has rotated twice. During the machining, the tool 31 constantly moves at a feed rate F per rotation in the Z-axis direction. In other words, a distance between the point Po1 and the point Po6 in the Z-axis direction is 2F.

Fig. 5(a) is a top view illustrating the machining trajectory To viewed in the Y-axis direction when the machining is further continued from the state in Fig. 4, and the tool 31 has moved in the feeding direction (Z-axis direction). Fig. 5(b) is a side view obtained by viewing Fig. 5(a) in the X-axis direction. In the first machining example, the vibration number is 2.5, and accordingly the tool 31 is located at the same position in the vibration direction V1 every time the workpiece 21 rotates twice. In other words, at the point Po1 in the first rotation of the workpiece 21 and at the point Po1 in the third rotation of the workpiece 21, the tool 31 is located at the same position in the vibration direction V1.

As described above, in Fig. 4 and Figs. 5(a) and 5(b), the machining trajectory To is illustrated in enlarged relation in the Z-axis direction. In actual machining, the feed rate F is set such that a portion of the workpiece 21 to be machined in the odd-ordinal-numbered rotation and a portion of the workpiece 21 to be machined in the even-ordinal-numbered rotation partially overlap each other in the Z-axis direction. Note that the outer circumferential surface of the workpiece 21 is machined into the substantially regular pentagonal shape.

The machine tool 10 can perform the machining of the workpiece 21 described above along a plurality of discrete machining paths in the cutting direction. Fig. 6 is a diagram illustrating the machining trajectories when the workpiece 21 is machined along the three paths. In Fig. 6, an outer circumferential surface 21a of the workpiece 21 before the machining, a first-path (first-machining) machining trajectory To1, a second-path (second-machining) machining trajectory To2, and a third-path (third-machining) machining trajectory To3 are respectively indicated by a dotted line, a dash-dot line, a dash-double-dot line, and a solid line. In the first machining example, the machining trajectory To1 is drawn so as to come into contact with the outer circumferential surface 21a of the workpiece 21. In addition, in Fig. 6, a region Qp1 to be machined along a first path, a region Qp2 to be machined along a second path, and a region Qp3 to be machined along a third path are respectively filled with oblique lines, horizontal lines, and vertical lines.

The control unit 15 moves the tool 31 in synchronization with the rotation phase of the workpiece 21 to allow the rotation phases of the workpiece 21 when the tool 31 begins to come into contact with the workpiece 21 to coincide with each other in the plurality of machining paths. Then, the workpiece 21 is cut with the same vibration number and at the same feed rate to allow phases of vibration waveforms of the tool 31 to coincide with each other in the plurality of machining paths and allow positions of the vertexes of the regular pentagonal shape with respect to the rotation phase of the workpiece 21 to coincide with each other.

As illustrated in Fig. 6, the machining trajectory To1, the machining trajectory To2, and the machining trajectory To3 have the substantially regular pentagonal shapes, which are similar to each other. In other words, when the workpiece 21 is viewed in the Z-axis direction, in each of the paths, a substantially regular pentagonal machined surface is obtained. In other words, according to the present embodiment, the workpiece 21 can be machined into the substantially regular polygonal shape along the plurality of discrete machining paths, and accordingly there is no need to excessively reduce the machining allowance of the workpiece 21, and it is possible to easily and efficiently machine the workpiece 21 without pre-machining.

Fig. 7 is a graph illustrating a relationship between the rotation phase of the workpiece 21 and a position of the tool 31 in the cutting direction. In the graph of Fig. 7, an ordinate axis represents the position of the tool 31 in the cutting direction, an abscissa axis represents the rotation phase of the workpiece 21, and positions of the tool 31 in the cutting direction in the first path to the third path in the odd-ordinal-numbered rotation and the even-ordinal-numbered rotation of the workpiece 21 are illustrated. In Fig. 7, vibration waveforms L11, L12, and L13 indicating the positions of the tool 31 in the cutting direction in the first, second, and third paths in the odd-ordinal-numbered rotation are indicated by dotted lines. Likewise, in Fig. 7, vibration waveforms L21, L22, and L23 representing positions of the tool 31 in the cutting direction in the first, second, and third paths in the even-ordinal-numbered rotation of the workpiece 21 are indicated by dot-dash lines.

As illustrated in Fig. 7, the control unit 15 drives the rotation mechanism, the vibration mechanism, and the movement mechanism in conjunction with each other such that the phases of the vibration waveforms of the tool 31 in the plurality of machining paths coincide with each other. In the first machining example, the respective phases of the vibration waveforms L11, L12, and L13 with respect to the rotation phase of the workpiece 21 coincide with each other, while the respective phases of the vibration waveforms L21, L22, and L23 with respect to the rotation phase of the workpiece 21 coincide with each other. By thus controlling each of the mechanisms, the workpiece 21 is machined along the plurality of discrete paths into the substantially regular polygonal shape.

In addition, in the first machining example, a cutting depth Xs of the tool 31 into the workpiece 21 in the X-axis direction and a vibration amplitude Xt (difference between the amplitude upper limit AU and the amplitude lower limit AL) of the tool 31 are set to equal values. Note that these values may also be set to different values.

As described above, the machine tool 10 in the present embodiment controls the rotation mechanism and the vibration mechanism in conjunction with each other to allow the outer circumferential surface of the workpiece to be machined into the substantially regular polygonal shape by lathe turning. As a method of machining the workpiece into the polygonal shape, polygon machining of machining the workpiece by rotating the tool and the workpiece around rotation axes parallel to each other can be listed, but the machining method in the present embodiment can more efficiently perform machining than the polygon machining. In addition, while the polygon machining involves intermittent cutting, the machining method in the present embodiment can machine the workpiece into the substantially regular polygonal shape by continuous cutting, and therefore stable cutting is possible.

### (Second Machining Example)

Next, as a second machining example, a case of cutting the workpiece 21 using the machine tool 10, while vibrating the tool 33 in synchronization with the rotation phase of the workpiece 21, to thereby machine the inner circumferential surface of the workpiece 21 into the substantially regular pentagonal shape will be described. Fig. 8(a) is a diagram illustrating the inner circumferential surface of the workpiece 21 which is machined into the regular pentagonal shape when viewed in the Z-axis direction, and illustrates the tool 33 for inner circumferential machining being in contact with the inner circumferential surface of the workpiece 21. Fig. 8(b) is a perspective view of the workpiece 21 with the machined inner circumferential surface when viewed in the Z-axis direction. The workpiece 21 is held by the jaw portion 17 to rotate integrally with the main spindle of the workpiece holder 11.

When the inner circumferential surface of the workpiece 21 is machined into a regular polygonal shape, the machining is performed with a pilot hole 21b being formed in advance in the workpiece 21. A diameter of the pilot hole 21b can be changed depending on the machining allowance for a final shape and the tool 33 to be used for inner diameter machining.

Referring to Figs. 9(a) to 9(c), Fig. 10, and Figs. 11(a) and 11(b), a description will be given of a method of setting the vibration number of the tool 31 per rotation of the workpiece 21 to 2.5 times and machining the inner circumferential surface of the workpiece 21 into the regular pentagonal shape. In the second machining example also, the machine tool 10 performs cutting by moving the tool 31 in the Z-axis direction (feeding direction) and vibrating the tool 31 in the X-direction (cutting direction), while rotating the workpiece 21. Additionally, in the second machining example also, the tool 33 is vibrated with a sine wave by the vibration mechanism, while the workpiece 21 is rotated in the counterclockwise direction in Fig. 8(a).

Figs. 9(a) to 9(c) are front views illustrating inner diameter machining performed by the machine tool 10, and a machining trajectory Ti is indicated by a solid line in the drawings. The machining trajectory Ti indicates a position where a leading end of the tool 33 in the cutting direction comes into contact with the workpiece 21, and the inner circumferential surface of the workpiece 21 is machined following the machining trajectory Ti. In addition, in Figs. 9(a) to 9(c), the amplitude upper limit AU, the amplitude middle AM, and the amplitude lower limit AL of the tool 33 are indicated by respective dash-double-dot lines. Since the tool 33 comes into contact with the inner circumferential surface of the workpiece 21, a diameter of a circle indicating the amplitude upper limit AU is largest, while a diameter of a circle indicating the amplitude lower limit AL is smallest.

Fig. 9(a) is a front view illustrating the machining trajectory Ti in the first rotation of the workpiece 21, which is viewed in the Z-axis direction. As described above, during one rotation of the workpiece 21, the tool 33 rotates 2.5 times. In Fig. 9(a), a starting point of the tool 31 in a first vibration thereof is illustrated as a point Pi1, an ending point of the tool 31 in the first vibration, which is also a starting point of the tool 33 in a second vibration thereof, is illustrated as a point Pi2, and an ending point of the tool 33 in the second vibration, which is also a starting point of the tool 33 in a third vibration thereof, is illustrated as a point Pi3. In addition, in Fig. 9(a), a middle point of the tool 33 in the third vibration, which is also a position where the tool 33 has vibrated 2.5 times, is indicated as a point Pi3.5.

In the present machining, the amplitude lower limit AL is set so as to coincide with the inner circumferential surface (pilot hole 21b) before the machining of the workpiece 21, and the tool 33 is located at the point Pi1 to begin to come into contact with the workpiece 21 at the amplitude lower limit AL. Then, when the workpiece 21 rotates 2/5 times, the tool 33 vibrates once to move to the point Pi2 and come into contact with the workpiece 21 at the amplitude lower limit AL. When the workpiece 21 rotates 2/5 times from there, the tool 33 vibrates one more time to move to the point Pi3 and come into contact with the workpiece 21 at the amplitude lower limit AL. When the workpiece 21 rotates 1/5 times from there, the tool 33 vibrates 1/2 times to move to the point Pi3.5 and come into contact with the workpiece 21 at the amplitude upper limit AU. In Fig. 9(a), a region Qi1 to be machined in the second rotation of the workpiece 21 is filled with oblique lines.

Fig. 9(b) is a front view illustrating the machining trajectory Ti in the second rotation of the workpiece 21, which is viewed in the Z-axis direction. In Fig. 9(b), an ending point of the tool 33 in the third vibration, which is also a starting point of the tool 33 in a fourth vibration thereof is illustrated as a point Pi4, an ending point of the tool 33 in the fourth vibration, which is also a starting point of the tool 33 in a fifth vibration thereof, is illustrated as a point Pi5, and an ending point of the tool 33 in the fifth vibration, which is also a starting point of the tool 33 in a sixth vibration thereof, is illustrated as a point Pi6. Additionally, in Fig. 9(b), a middle point of the tool 33 in the third vibration, which is also a position of the tool 33 when the workpiece 21 begins the second rotation, is illustrated as the point Pi3.5.

As described above, when the second rotation of the workpiece 21 is started, the tool 33 is located at the point Pi3.5, and the workpiece 21 rotates 1/5 times from there to move the tool 33 to the point Pi4 and bring the tool 33 into contact with the workpiece 21 at the amplitude lower limit AL. When the workpiece 21 rotates 2/5 times, the tool 33 vibrates once to move to the point Pi5 to come into contact with the workpiece 21 again at the amplitude lower limit AL. When the workpiece 21 rotates 2/5 times from there, the tool 33 vibrates one more time to move to the point Pi6 and come into contact with the workpiece 21 at the amplitude lower limit AL. In Fig. 9(b), a region Qi2 to be machined in the second rotation of the workpiece 21 is filled with dots.

In the third and subsequence rotations of the workpiece 21, the machining described above is repeatedly performed in sequence. In other words, in the odd-ordinal-numbered rotation of the workpiece 21, machining is performed with the machining trajectory Ti illustrated in Fig. 9(a) while, in the even-ordinal-numbered rotation of the workpiece 21, machining is performed with the machining trajectory Ti illustrated in Fig. 9(b). In addition, the control unit 15 drives the rotation mechanism and the vibration mechanism such that the tool 33 is located at the same position in the vibration direction V1 for each fixed rotation period of the main spindle of the workpiece holder 11 that holds the workpiece 21. More specifically, when the workpiece 21 rotates by u (u: 0, 1, 2, ...) ×144°, the tool 33 is located at the amplitude lower limit AL and, when the workpiece 21 rotates by v (v: 0, 1, 2, ...) ×144+72°, the tool 33 is located at the amplitude upper limit AU. By continuously performing such machining in the rotation axis direction S1 (Z-axis direction) of the workpiece 21, the inner circumferential surface of the workpiece 21 is machined into the substantially regular pentagonal shape when viewed in the rotation axis direction S1 of the workpiece 21.

Fig. 9(c) is a diagram illustrating the respective machining trajectories Ti in the first and second rotations of the workpiece 21 which are superimposed on each other. Fig. 9(c) illustrates only a portion of the stacked machining trajectories Ti in the first and second rotations of the workpiece 21 where a cutting depth of the tool 33 into the workpiece 21 is large. As illustrated in Fig. 9(c), the superimposed machining trajectories are formed in the substantially regular pentagonal shape, and it will be understood that the workpiece 21 is machined by the machining described above into the substantially regular pentagonal shape. As described above, each of Figs. 9(a) to 9(c) is a diagram having a portion thereof illustrated in enlarged relation in the vibration direction V1 of the tool 33 and, in actual machining, the workpiece 21 is machined into a shape closer to the regular pentagonal shape than the shape illustrated in Fig. 9(c).

As illustrated in Fig. 9(c), in the second machining example, each of vertexes of the regular pentagonal shape of the workpiece 21 is machined when the tool 31 is located at the amplitude upper limit AU, while the center of each of the sides of the regular pentagonal shape of the workpiece 21 is machined when the tool 31 is located at the amplitude middle AM. In other words, a circle indicating the amplitude middle AM of the tool 31 is inscribed in the regular pentagonal shape of the workpiece 21. The control unit 15 controls the rotation mechanism and the movement mechanism such that the workpiece 21 is cut by the tool 33 in such a positional relationship.

Fig. 10 is a perspective view illustrating the machining trajectory Ti and the points Pi1 to Pi6 when the workpiece 21 has rotated twice. During the machining, the tool 33 constantly moves at the feed rate F per rotation in the Z-axis direction. In other words, a distance between the point Pi1 and the point Pi6 in the Z-axis direction is 2F.

Fig. 11(a) is a top view illustrating the machining trajectory Ti viewed in the Y-axis direction when the machining is further continued from the state in Fig. 10, and the tool 33 has moved in the feeding direction (Z-axis direction). Fig. 11(b) is a side view obtained by viewing Fig. 11(a) in the X-axis direction. In the second machining example, the vibration number is 2.5 and, accordingly, the tool 33 is located at the same position in the vibration direction V1 every time the workpiece 21 rotates twice. In other words, at the point Pi1 in the first rotation of the workpiece 21 and at the point Pi1 in the third rotation of the workpiece 21, the tool 33 is located at the same position in the vibration direction V1.

As described above, in Fig. 10 and Figs. 11(a) and 11(b), the machining trajectory Ti is illustrated in enlarged relation in the Z-axis direction. In actual machining, the feed rate F is set such that a portion of the workpiece 21 to be machined in the odd-ordinal-numbered rotation and a portion of the workpiece 21 to be machined in the even-ordinal-numbered rotation partially overlap in the Z-axis direction. Note that the inner circumferential surface of the workpiece 21 is machined into the substantially regular pentagonal shape.

The machine tool 10 can perform the machining of the workpiece 21 described above along a plurality of discrete machining paths in the cutting direction. Fig. 12 is a diagram illustrating the machining trajectories when the workpiece 21 is machined along the three paths. In Fig. 12, a first-path (first-machining) machining trajectory Ti1, a second-path (second-machining) machining trajectory Ti2, and a third-path (third-machining) machining trajectory Ti3 are respectively indicated by a dash-dot line, a dash-double-dot line, and a solid line. In the second machining example, the machining trajectory Ti1 is drawn so as to come into contact with the pilot hole 21b in the inner circumferential surface of the workpiece 21. In addition, in Fig. 6, the region Qp1 to be machined in the first path, the region Qp2 to be machined in the second path, and the region Qp3 to be machined in the third path are respectively filled with oblique lines, horizontal lines, and vertical lines.

In the second machining example also, by the control unit 15, the tool 33 is moved in synchronization with the rotation phase of the workpiece 21, and the rotation phases of the workpiece 21 when the tool 33 begins to come into contact with the workpiece 21 coincide with each other in the plurality of machining paths. Then, the workpiece 21 is cut with the same vibration number and at the same feed rate to allow phases of vibration waveforms of the tool 33 to coincide with each other in the plurality of machining paths and allow positions of the vertexes of the regular pentagonal shape with respect to the rotation phase of the workpiece 21 to coincide with each other.

As illustrated in Fig. 12, the machining trajectory Ti1, the machining trajectory Ti2, and the machining trajectory Ti3 have the substantially regular pentagonal shapes, which are similar to each other. That is, when the workpiece 21 is viewed in the Z-axis direction, in each of the paths, a substantially regular pentagonal machine surface is obtained. In other words, according to the present embodiment, the workpiece 21 can be machined into the substantially regular polygonal shape along the plurality of discrete machining paths, and accordingly there is no need to excessively reduce the machining allowance of the workpiece 21, and it is possible to perform easy machining into the regular polygonal shape.

As described above, with the machine tool 10 in the present embodiment, by controlling the rotation mechanism and the vibration mechanism in conjunction with each other, it is possible to machine the inner circumferential surface of the workpiece into the substantially regular polygonal shape by lathe turning. In addition, according to the machining method in the present embodiment, the vibration amplitude and the cutting depth are appropriately set to allow the workpiece to be machined into the substantially regular polygonal shape by continuous cutting, and therefore stable cutting is possible.

Thus, according to the present embodiment, by the lathe turning, each of the outer circumferential surface and the inner circumferential surface of the workpiece can efficiently be machined into the substantially regular polygonal shape. While the workpiece is machined into the substantially regular pentagonal shape under cutting conditions such that the vibration number is 2.5 in the machining examples described above, the present invention can machine the workpiece into another regular polygonal shape by setting the vibration number to another value. Hereinbelow, a description will be given of machining examples in which the vibration number is changed from that in the machining examples described above, and the workpiece 21 is machined into another regular polygonal shape with the configuration in the first embodiment.

### (Other Machining Examples)

Next, referring to Figs. 13(a) to 13(f), a description will be given of other machining examples according to the present embodiment. In the other machining examples described hereinbelow also, the machine tool 10 moves the tool in the Z-axis direction (feeding direction) and vibrates the tool in the X-axis direction (cutting direction), while rotating the workpiece 21, to machine the workpiece 21 into the substantially regular polygonal shape. In Figs. 13(a) to 13(f), each of the amplitude upper limit AU, the amplitude middle AM, and the amplitude lower limit AL of the tool is indicated by a dash-double-dot line.

In Figs. 13(a), 13(c), and 13(e) illustrating a machining example using outer diameter machining, a starting point of the tool in a q-th vibration thereof is illustrated as a point Poq, while the machining trajectory To is indicated by a solid line. In addition, in Figs. 13(a), 13(c), and 13(e), the region Qo1 to be machined with the machining trajectory To in the first rotation of the workpiece 21 is filled with oblique lines, while the region Qo2 to be machined with the machining trajectory To in the second rotation of the workpiece 21 is filled with dots.

In Figs. 13(b), (d), and (f) illustrating a machining example using inner diameter machining, a starting point of the tool in the q-th vibration is illustrated as a point Piq, while the machining trajectory Ti is indicated by a solid line. In addition, in Figs. 13(b), 13(d), and 13(f), the region Qi1 to be machined with the machining trajectory Ti in the first rotation of the workpiece 21 is filled with oblique lines, while the region Qi2 to be machined with the machining trajectory Ti in the second rotation of the workpiece 21 is filled with dots.

Fig. 13(a) is a diagram illustrating, as a third machining example, the workpiece 21 which is machined into a substantially regular triangular shape by outer diameter machining in which the vibration number is 3. In the third machining example, the tool vibrates three times in each rotation of the workpiece 21 to machine the outer circumferential surface into the substantially regular triangular shape. At this time, when viewed in the Z-axis direction, the machining trajectory To of the workpiece 21 is constantly the same irrespective of the number of rotations, and therefore Fig. 13(a) illustrates only the region Qo1.

Fig. 13(b) is a diagram illustrating, as a fourth machining example, the workpiece 21 which is machined into the substantially regular triangular shape by inner diameter machining in which the vibration number is 3. In the fourth machining example, the tool vibrates three times in each rotation of the workpiece 21 to machine the inner circumferential surface into the substantially regular triangular shape. At this time, when viewed in the Z-axis direction, the machining trajectory Ti of the workpiece 21 is constantly the same irrespective of the number of rotations, and therefore Fig. 13(b) illustrates only the region Qi1.

Fig. 13(c) is a diagram illustrating, as a fifth machining example, the workpiece 21 machined into the substantially regular triangular shape by outer diameter machining in which the vibration number is 1.5. In the fifth machining example, the tool vibrates three times in each two rotations of the workpiece 21 to machine the outer circumferential surface into the substantially regular triangular shape. The machining trajectory To illustrated in Fig. 13(c) is obtained by stacking the machining trajectory To in the first rotation of the workpiece 21 and the machining trajectory To in the second rotation of the workpiece 21 on each other and extracting only portions where the cutting depths of the tool into the workpiece 21 are large. In addition, in the fifth machining example, as illustrated in Fig. 13(c), the region Qo1 and the region Qo2 are mixed when viewed in the Z-axis direction.

Fig. 13(d) is a diagram illustrating, as a sixth machining example, the workpiece 21 which is machined into the substantially regular triangular shape by inner diameter machining in which the vibration number is 1.5. In the sixth machining example, the tool vibrates three times in each two rotations of the workpiece 21 to machine the inner circumferential surface into the substantially regular triangular shape. The machining trajectory To illustrated in Fig. 13(d) is obtained by stacking the machining trajectory To in the first rotation of the workpiece 21 and the machining trajectory To in the second rotation of the workpiece 21 on each other and extracting only portions where the cutting depths of the tool into the workpiece 21 are large. In addition, in the sixth machining example, as illustrated in Fig. 13(d), the region Qi1 and the region Qi2 are mixed when viewed in the Z-axis direction.

Fig. 13(e) is a diagram illustrating, as a seventh machining example, the workpiece 21 which is machined into a substantially regular rectangular shape by outer diameter machining in which the vibration number is 4. In the seventh machining example, the tool vibrates four times in each rotation of the workpiece 21 to machine the outer circumferential surface into the substantially regular rectangular shape. At this time, when viewed in the Z-axis direction, the machining trajectory To of the workpiece 21 is constantly the same irrespective of the number of rotations, and therefore Fig. 13(e) illustrates only the region Qo1.

Fig. 13(f) is a diagram illustrating, as an eighth machining example, the workpiece 21 which is machined into the substantially regular rectangular shape by inner diameter machining in which the vibration number is 4. In the eighth machining example, the tool vibrates four times in each rotation of the workpiece 21 to machine the inner circumferential surface into the substantially regular rectangular shape. At this time, when viewed in the Z-axis direction, the machining trajectory Ti of the workpiece 21 is constantly the same irrespective of the number of rotations, and therefore Fig. 13(f) illustrates only the region Qi1.

Thus, according to the present embodiment, when viewed in the rotation axis direction of the workpiece, the outer circumferential surface and the inner circumferential surface of the workpiece can efficiently be machined by lathe turning into the substantially regular polygonal shape. In the present embodiment, in a case of machining the workpiece into a regular n-angle polygonal shape, when a fixed rotation period of the workpiece is m rotations, the rotation mechanism and the vibration mechanism are controlled in conjunction with each other such that the tool vibrates at a vibration number of n/m. At this time, m is a natural number of 1 or more, n is a natural number of 3 or more, and n and m are prime to each other. Therefore, according to the present embodiment, it is possible to, e.g., set the vibration number to 1.2 and machine the workpiece into a substantially regular hexagonal shape in each five rotations or set the vibration number to 1.75 and machine the workpiece into a substantially regular heptagonal shape in each four rotations.

As described above, as a result of driving the rotation mechanism and the vibration mechanism such that the vibration number is n/m, the tool is located at the same position in the vibration direction V1 for each fixed rotation period m of the workpiece, and the workpiece is machined into a substantially regular n-angle polygonal shape in each m rotations of the workpiece. In addition to the rotation mechanism and the vibration mechanism, a movement mechanism of the tool is driven in conjunction to allow the workpiece to be machined along a plurality of discrete paths.

In the outer diameter machining according to the present embodiment, a center of each of the sides of the regular polygonal shape of the workpiece is machined when the tool is located at the amplitude upper limit AU. Meanwhile, in the inner diameter machining according to the present embodiment, each of the vertexes of the regular polygonal shape of the workpiece is machined when the tool is located at the amplitude upper limit AU. As a result of control of the rotation mechanism and the movement mechanism by the control unit 15 such that the workpiece is cut with the tool in a such a positional relationship, the workpiece is machined into the substantially regular polygonal shape.

In addition, according to the present embodiment, it is possible to set a plurality of the vibrations numbers for regular polygonal shapes having the same number of angles. For example, when the outer circumferential surface of the workpiece is to be machined into a regular triangular shape, the vibration number may be set to 3 (see Fig. 13(a)), or the vibration number may also be set to 1.5 (see Fig. 13(c)). Since a vibration speed due to the vibration mechanism is limited, by increasing the rotation period of m so as to reduce the vibration number of n/m, it is possible to increase the number of rotations (circumferential speed) of the workpiece, and thereby reduce machining time and improve productivity.

### <Other Embodiments>

The embodiment described above is only exemplary, and the present disclosure can be changed as appropriate and implemented within a scope not departing from the gist thereof. In addition, the processing and means described in the present disclosure can freely be combined and implemented as long as no technical inconsistency arises. For example, in the embodiment described above, the cylindrical workpiece is machined, while being rotated, but the workpiece is not limited to the cylindrical shape.

Meanwhile, the processing described as being performed by one device may also be shared and performed by a plurality of devices. Alternatively, the processing as described as being performed by different devices may also be performed by one device. In a computer system, which hardware configuration is used to implement each function can flexibly be changed.

### [Reference Signs List]

- 10: Machine tool
- 15: Control Unit
- 21: Workpiece (Object to be cut)
- 31: Tool
- S1: Rotation axis direction
- V1: Vibration direction

## Claims

1. A machine tool comprising:
a main spindle to which a workpiece is to be attached;
a rotation mechanism that rotates the main spindle;
a tool holder that holds a tool for cutting the workpiece;
a movement mechanism that moves the main spindle and the tool holder relative to each other in a rotation axis direction of the main spindle;
a vibration mechanism that vibrates the main spindle and the tool holder relative to each other in a vibration direction perpendicular to the rotation axis direction; and
a control unit that controls the rotation mechanism and the vibration mechanism,
wherein the machine tool cutting the workpiece by using the movement mechanism and the vibration mechanism so as to vibrate and move the workpiece and the tool relatively each other, while the rotation mechanism rotates the main spindle, and
wherein the control unit driving the rotation mechanism and the vibration mechanism such that the tool is located at the same position in the vibration direction for each fixed rotation period of the main spindle and controlling the rotation mechanism and the vibration mechanism such that an outer circumferential surface or inner circumferential surface of the workpiece is machined into a substantially regular polygonal shape when viewed in the rotation axis direction.

2. The machine tool according to claim 1, wherein the control unit sets a number of vibrations of the vibration mechanism per rotation of the main spindle on the basis of a number of angles of the regular polygonal shape.

3. The machine tool according to claim 2, wherein
when the fixed rotation period is m and the number of angles of the regular polygonal shape is n, m is a natural number of 1 or more, n is a natural number of 3 or more, and m and n are prime to each other, and
the control unit sets the number of vibrations of the vibration mechanism to n/m.

4. The machine tool according to claim 1, wherein
when the tool is located at an amplitude upper limit of a vibration waveform of the tool resulting from the vibration mechanism, a cutting depth of the tool into the workpiece is larger than that when the tool is located at an amplitude lower limit of the vibration waveform, and
the control unit controls the movement mechanism and the vibration mechanism in synchronization such that, during cutting of the outer circumferential surface of the workpiece, a center of a side of the regular polygonal shape is machined when the tool is located at the amplitude upper limit of the vibration waveform.

5. The machine tool according to claim 1, wherein
when the tool is located at an amplitude upper limit of a vibration waveform of the tool resulting from the vibration mechanism, a cutting depth of the tool into the workpiece is larger than that when the tool is located at an amplitude lower limit of the vibration waveform, and
the control unit controls the movement mechanism and the vibration mechanism in synchronization such that, during cutting of the inner circumferential surface of the workpiece, a vertex of the regular polygonal shape is machined when the tool is located at the amplitude upper limit of the vibration waveform.

6. The machine tool according to claim 1, wherein the movement mechanism is configured to be able to move the main spindle and the tool holder relative to each other in a direction parallel to the vibration direction.

7. The machine tool according to claim 6, wherein
the control unit is capable of controlling an operation of the movement mechanism and,
when first machining of obtaining a substantially regular polygonal machined surface when viewed in the rotation axis direction and second machining of machining the machined surface into a shape similar to that of the machined surface when viewed in the rotation axis direction are to be performed, the control unit controls the rotation mechanism, the movement mechanism, and the vibration mechanism such that a phase of the vibration waveform of the tool resulting from the vibration mechanism with respect to rotation of the main spindle in the second machining coincides with that in the first machining.

8. A control device that controls a machine tool, the machine tool including:
a main spindle to which a workpiece is to be attached;
a rotation mechanism that rotates the main spindle;
a tool holder that holds a tool for cutting the workpiece;
a movement mechanism that moves the main spindle and the tool holder relative to each other in a rotation axis direction of the main spindle; and
a vibration mechanism that vibrates the main spindle and the tool holder relative to each other in a vibration direction perpendicular to the rotation axis direction, the machine tool machining an outer circumferential surface or inner circumferential surface of the workpiece into a substantially regular polygonal shape when viewed in the rotation axis direction by using the movement mechanism and the vibration mechanism so as to vibrate and move the workpiece and the tool relative to each other, while the rotation mechanism rotates the main spindle,
the control device driving the rotation mechanism and the vibration mechanism such that the tool is located at the same position in the vibration direction for each fixed rotation period of the main spindle.
